# FASCICULE DE BREVET EUROPEEN

(11) **EP 2 411 770 B1**
(45) Date de publication et mention de la délivrance du brevet: **23.08.2017**
(21) Numéro de dépôt: 10716575.5
(22) Date de dépôt: 25.03.2010
(51) Int. Cl.: G01D 4/00

(54) **PROCÉDÉ DE GESTION DU FONCTIONNEMENT D'UN CAPTEUR DE TÉLÉINFORMATION, ET CAPTEUR ASSOCIÉ**
VERFAHREN ZUM VERWALTEN DES BETRIEBS EINES FERNINFORMATIONSSENSORS UND DIESBEZÜGLICHER SENSOR
METHOD FOR MANAGING THE OPERATION OF A REMOTE INFORMATION SENSOR, AND ASSOCIATED SENSOR

(30) Priorité: 27.03.2009 FR 0901512
(43) Date de publication de la demande: 01.02.2012
(73) Titulaire: SAGEMCOM ENERGY & TELECOM SAS, 92500 Rueil-Malmaison (FR)
(72) Inventeur: GAUDIN, Jean-Michel, F-92500 Rueil-Malmaison (FR); WEBER, Patrick, F-92500 Rueil-Malmaison (FR)
(74) Mandataire: Camus, Olivier Jean-Claude
(86) Numéro de dépôt international: PCT/FR2010/050539
(87) Numéro de publication internationale: WO 2010/109139

(56) Documents cités:
- EP-A1- 0 420 295
- WO-A1-86/05024
- GB-A- 2 343 571
- US-A1- 2007 051 872

## Description

### DOMAINE TECHNIQUE DE L'INVENTION

La présente invention a pour objet un procédé de gestion du fonctionnement d'un capteur de téléinformations destiné à être utilisé avec un compteur, par exemple, mais pas uniquement, un compteur de type compteur électrique. La présente invention se rapporte également à un dispositif, de type capteur de téléinformations, apte à mettre en oeuvre le procédé selon l'invention. L'invention a essentiellement pour but de proposer un capteur de téléinformations, et une gestion de l'utilisation dudit capteur, qui permet de prolonger la durée de vie autonome, c'est-à-dire sans remplacement de la batterie, du capteur considéré. Par téléinformation, on désigne toute information qui est disponible dans le compteur considéré.

Le domaine de l'invention est, d'une façon générale, celui des compteurs destinés à mesurer la consommation d'un élément tel que l'eau, le gaz, la chaleur ou encore l'électricité. La présente invention sera plus particulièrement décrite dans le cas où le compteur intervenant est un compteur de type compteur électrique, mais l'objet de l'invention est applicable à tout autre type de compteur - notamment les compteurs de gaz, d'eau et/ou de chaleur notamment dans le cas où ceux-ci délivrent un signal modulé. Dans ce domaine, il est nécessaire de prélever régulièrement des données relatives au compteur considéré. Ces données peuvent notamment être des valeurs de relevé de consommation de la grandeur physique à laquelle est associée le compteur, et/ou des informations relatives à l'identification du compteur, et/ou des informations relatives au bon fonctionnement du compteur, et/ou encore des informations relatives à la sécurisation du compteur, ou tout autre type d'informations.

Dans un premier temps, les informations relatives au compteur compteurs étaient relevées manuellement par un agent spécialisé, ou par un utilisateur qui devait renvoyer lesdites informations à la compagnie de gestion appropriée. Une automatisation des relevés s'est donc avérée judicieuse, et on a ainsi proposé l'utilisation de modules électroniques intervenant comme capteurs de téléinformations. Un tel capteur constitue une unité d'acquisition de données ; il est destiné à être relié à un compteur considéré, et il est notamment apte à extraire des informations dudit compteur, à les mémoriser, et avantageusement à les transmettre à distance, automatiquement ou suite à une sollicitation, par exemple au moyen d'un module radio qu'il comporte.

### ARRIERE-PLAN TECHNOLOGIQUE DE L'INVENTION

Une fois installé et relié au compteur auquel il est destiné, le capteur est destiné à rester en position pour une très longue durée. Typiquement, la durée visée avant son remplacement est de l'ordre d'une quinzaine d'années. A cet effet, le capteur considéré incorpore donc une batterie, le plus souvent sous la forme d'une pile de 3,6 volts. Il est donc nécessaire d'optimiser la consommation de la ressource en énergie que constitue la batterie ; or actuellement, la batterie du capteur est sollicitée dès la sortie de l'usine de production dudit capteur. En effet, dès la sortie de l'usine, certains modules électroniques du capteur sont alimentés par la batterie, notamment un module de démodulation des informations recueillies depuis le compteur. Et très souvent, entre la sortie de l'usine de production, et la mise en service effective du capteur considéré, plusieurs années s'écoulent. Ainsi, pendant ces années, le capteur consomme inutilement sa ressource énergétique, ce qui limite d'autant sa durée de vie une fois qu'il est mis en service en étant connecté au compteur auquel il est destiné. Les documents WO86/05024 et EP0420295 décrivent des procédés de gestion du fonctionnement d'un capteur selon l'état de la technique.

### DESCRIPTION GENERALE DE L'INVENTION

Le procédé et le capteur selon l'invention proposent une solution au problème qui vient d'être exposé. Dans l'invention, on propose une solution pour que la batterie du capteur ne soit pas utilisée dès la sortie d'usine de production, au moins pas utilisée de manière significative en alimentant de manière inutile certains modules électroniques dudit capteur. A cet effet, on prévoit dans l'invention la définition d'un mode de veille particulier, dit mode de veille profonde, dans lequel est placé le capteur considéré dès sa sortie d'usine de production. Le mode de veille profonde est maintenu jusqu'à ce que le capteur soit connecté à un compteur, et que le compteur transmette au capteur un signal approprié, dit signal de sortie de veille profonde. Avantageusement, dans certains cas, le capteur peut, après avoir été connecté à un compteur, être de nouveau placé dans le mode de veille profonde.

L'invention concerne donc essentiellement un procédé de gestion du fonctionnement d'un capteur d'information pour compteur, notamment de type compteur électrique, caractérisé en ce qu'il comporte les différentes étapes consistant à :
- placer le capteur dans un mode de veille profonde, dans lequel une batterie dudit capteur n'alimente pas électriquement notamment un module de démodulation de signaux issus dudit compteur ;
- relier le capteur au compteur ;
- détecter, au moyen d'un module de détection du capteur, un signal d'information en provenance du compteur ;
- sortir le capteur du mode de veille profonde pour le placer dans un mode actif dans lequel la batterie alimente électriquement notamment le module de démodulation.

Le procédé selon l'invention peut comporter, en plus des caractéristiques principales qui viennent d'être mentionnées dans le paragraphe précédent, une ou plusieurs caractéristiques supplémentaires parmi les suivantes:
- l'étape consistant à sortir le capteur du mode de veille profonde comporte les différentes opérations consistant à :
- transformer, au sein du module de détection, le signal d'information en un signal d'interruption asynchrone transmis à un microcontrôleur du capteur ;
- activer le microcontrôleur notamment en activant une horloge interne du microcontrôleur ;
- émettre depuis le microcontrôleur vers un dispositif interrupteur un signal de contrôle provoquant une transition entre un mode bloqué, dans lequel le dispositif interrupteur ne laisse pas passer un signal électrique entre la batterie et le module de démodulation, et un mode passant, dans lequel le dispositif interrupteur laisse passer un signal électrique entre la batterie et le module de démodulation.
- le procédé comporte l'étape supplémentaire consistant à, en l'absence de signal de contrôle, basculer le capteur du mode actif au mode de veille profonde.
- le procédé comporte l'étape supplémentaire consistant à, préalablement à l'étape de basculement du capteur depuis le mode actif vers le mode de veille profonde, mémoriser des informations transmises par le compteur au capteur dans un module de mémoire.

Les différentes caractéristiques supplémentaires du procédé selon l'invention, dans la mesure où elles ne s'excluent pas mutuellement, sont combinées selon toutes les possibilités d'association pour aboutir à différents exemples de mise en oeuvre de l'invention.

La présente invention se rapporte également à un capteur apte à intervenir dans le procédé selon l'une au moins des revendications précédentes, ledit capteur comportant notamment :
- un microcontrôleur ;
- une batterie d'alimentation électrique ;
- un module de démodulation de signaux reçus depuis un compteur, notamment un compteur électrique, relié audit capteur ;
caractérisé en ce que ledit capteur comporte :
- un module de détection pour détecter la transmission depuis le compteur vers le capteur d'un signal d'information ;
- un dispositif interrupteur pour bloquer l'alimentation électrique du module de démodulation tant qu'aucun signal d'information n'a été détecté par le module de détection, et pour assurer l'alimentation électrique du module de démodulation lorsqu'un signal d'information a été détecté par le module de détection .

Le capteur selon l'invention peut comporter, en plus des caractéristiques principales qui viennent d'être mentionnées dans le paragraphe précédent, une ou plusieurs caractéristiques supplémentaires parmi les suivantes:
- le module de détection comporte un circuit détecteur de crête.
- le circuit détecteur de crête est du type circuit tripleur de tension.
- le module de détection comporte une résistance d'entrée de valeur comprise entre 1 kilo-ohm et 10 kilo-ohms, notamment 4,7 kilo-ohms.
- le module de détection comporte un moyen de génération d'un signal d'interruption asynchrone lorsqu'un signal de téléinformation est reçu par ledit capteur.
- le dispositif interrupteur comporte un transistor de type MOSFET qui est passant lors de la transmission d'un signal de contrôle, émis par le microcontrôleur, sur la grille dudit transistor.

Les différentes caractéristiques supplémentaires du capteur selon l'invention, dans la mesure où elles ne s'excluent pas mutuellement, sont combinées selon toutes les possibilités d'association pour aboutir à différents exemples de mise en oeuvre de l'invention.

L'invention et ses différentes applications seront mieux comprises à la lecture de la description qui suit et à l'examen des figures qui l'accompagnent.

### BREVE DESCRIPTION DES FIGURES

Celles-ci ne sont présentées qu'à titre indicatif, et nullement limitatif de la portée de l'objet de la présente invention. Les figures montrent :
- à la figure 1, une représentation schématique du capteur de téléinformation selon l'invention ;
- à la figure 2, un organigramme illustrant un exemple de mise en oeuvre du procédé selon l'invention ;
- à la figure 3, un exemple de circuit électronique apte à être utilisé dans le capteur selon l'invention pour détecter un signal apte à faire sortir ledit capteur d'un mode de veille profonde ;
- à la figure 4, un chronogramme illustrant l'évolution de différents signaux dans le circuit électronique de la figure 3 lors d'un exemple de la mise en oeuvre du procédé selon l'invention ;
- à la figure 5, un exemple de circuit électronique apte à être utilisé dans le capteur selon l'invention pour assurer l'alimentation électrique de certains modules dudit capteur une fois que ledit capteur est sorti du mode de veille profonde.

### DESCRIPTION DES FORMES DE REALISATION PREFEREES DE L'INVENTION

Sauf précision contraire, les différents éléments apparaissant sur différentes figures conservent les mêmes références.

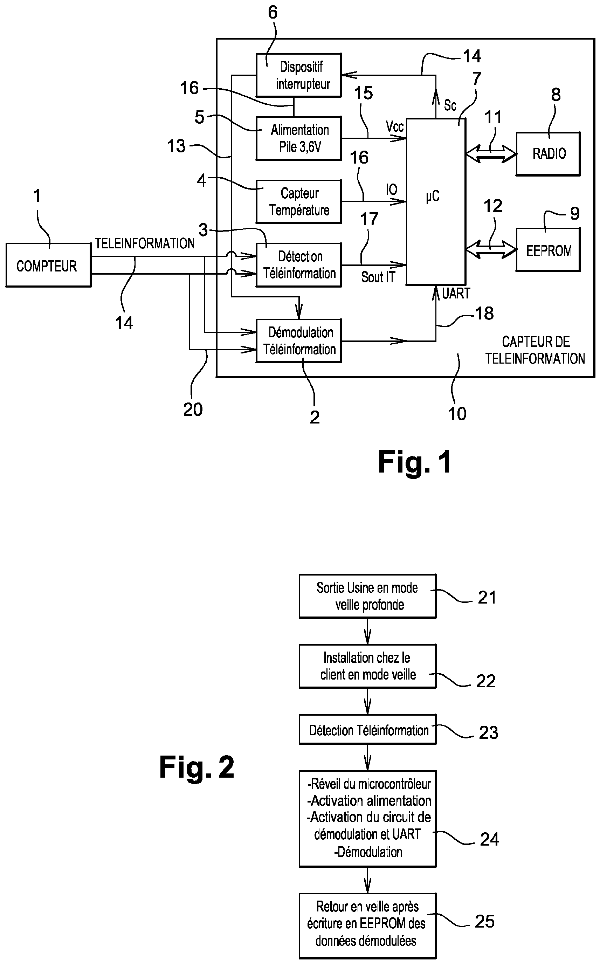

A la figure 1, on a représenté un exemple de capteur 10 de téléinformations. Les téléinformations, également désignées comme informations, sont issues d'un compteur 1, notamment un capteur électrique.

Dans l'exemple représenté, le capteur 10 comporte les éléments suivants :
- un microcontrôleur 7 ;
- un module de mémoire de type EEPROM 9, apte à échanger des informations avec le microcontrôleur 7 au travers d'une liaison 12;
- un module radio 8, apte à échanger des informations avec le microcontrôleur 7 au travers d'une liaison 11 ; le module radio 8 permet de transmettre les informations reçues depuis le compteur 1 vers une passerelle résidentielle, par exemple un serveur distant, par voie aérienne ;

- un module 2 de démodulation des informations transmises par le compteur 1 ; le module 2 de démodulation est relié au microcontrôleur 7 par une liaison 18 ; la liaison 18 est connectée à un port UART (Universal Asynchronous Receiver Transmitter - il s'agit d'un émetteur-récepteur asynchrone) du microcontrôleur 7 ; la fonction du démodulateur 2 est de démoduler les informations émises par le compteur pour les transformer en signaux compatibles avec le microcontrôleur 7 ;
- un dispositif interrupteur 6, relié par une première liaison 13 au module 2 de démodulation ; par ailleurs, le dispositif interrupteur est relié au microcontrôleur 7 par une liaison 14 ;
- une batterie 5, par exemple une pile de 3,6 volts ; la batterie 5 est reliée d'une part à un port VCC du microcontrôleur 7 par une liaison 15, et d'autre part au dispositif interrupteur 6 par une liaison 16 ;
- un capteur de température 4, relié à un port d'entrée I/O du microcontrôleur 7 par l'intermédiaire d'une liaison 16 ;
- un module 3 de détection de l'arrivée d'une information émise par le compteur 1, relié par une liaison 17 à un port IT, gérant les interruptions, du microcontrôleur 7.

Le compteur 1 est relié au capteur 10 de téléinformation par une première liaison 19 connectée sur le module 3 de détection et par une deuxième liaison 20 connectée sur le module 2 de démodulation.

Un exemple de mise en oeuvre possible du procédé selon l'invention est illustré au moyen de l'organigramme de la figure 2.

Sur cette figure, une première étape 21 consiste à placer, par exemple dès la sortie de l'usine de production, le capteur 10 dans un mode particulier, dit mode de veille profonde. L'état de veille profonde est un état dans lequel la batterie 5 n'alimente pas les différents éléments du capteur 10 qui viennent d'être décrits. Avantageusement, on prévoit ici que seul le microcontrôleur 7 soir alimenté au niveau de son port d'alimentation VCC via la liaison 15 ; une telle alimentation est avantageuse pour gérer par exemple les signaux d'interruption asynchrone susceptibles d'être reçus par le microcontrôleur 7. Ainsi, l'horloge du microcontrôleur 7 n'est pas activée, et le module de démodulation 2 ne consomme pas d'énergie.

Une deuxième étape 22 consiste en l'installation chez un utilisateur du capteur 10. L'installation implique la connexion du capteur 10 sur le compteur 1 par l'intermédiaire de la liaison 19 et de la liaison 20.

Une étape suivante 23 est une étape de détection par le capteur 10, et plus précisément par le module de détection 3, d'un signal de téléinformation émis par le compteur 1. Lorsqu'un tel signal est détecté, le module de détection 3 émet sur la liaison 17, un signal d'interruption asynchrone reçu au niveau du port IT du microcontrôleur 7.

Le dispositif de détection 3 est avantageusement un détecteur d'énergie ; il peut par exemple utiliser l'énergie du signal reçu du compteur pour devenir actif et générer le signal d'interruption ; tout autre type de détecteur d'énergie peut être utilisé dans le capteur selon l'invention.

Dès la réception par le microcontrôleur 7 du signal d'interruption asynchrone, on procède, dans une étape suivante 24, à l'activation du microcontrôleur 7 en activant l'horloge interne de ce dernier. Un signal de contrôle Sc est alors émis par le microcontrôleur 7 via la liaison 14 pour commuter le dispositif interrupteur 6, et le rendre passant de telle sorte que l'alimentation des différents modules, et notamment du module 2 de démodulation, soit effective. Les échanges entre le module 2 de démodulation et le port UART du microcontrôleur 7 peuvent alors s'effectuer.

Dans un mode de mise en oeuvre particulier de l'invention, on prévoit une étape suivante 25 dans laquelle le capteur 10 repasse dans le mode de veille profonde. Préalablement, les données reçues par le capteur 10 sont mémorisées dans le module de mémoire 9. Une telle étape est avantageuse et ne perturbe en rien l'exploitation des informations reçues depuis le compteur 1, lesdites informations étant émises ponctuellement, et non de manière continue. Le passage dans le mode de veille profonde est réalisé par l'émission d'un nouveau signal de contrôle depuis le microcontrôleur 7 vers le dispositif interrupteur 6, ou par l'interruption du signal de contrôle Sc, rendant le transistor considéré non passant.

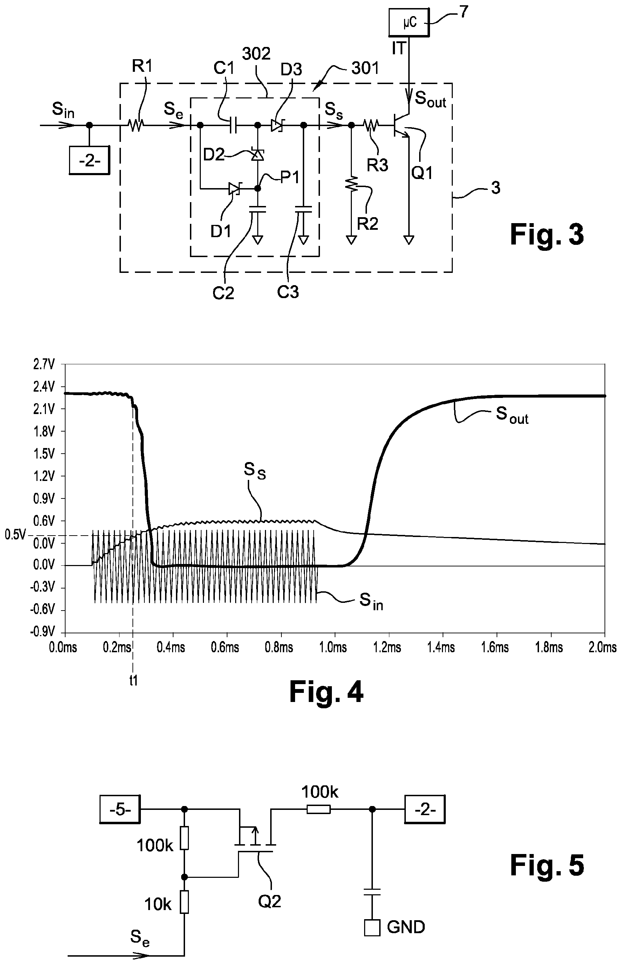

La figure 3 illustre un exemple de réalisation du module 3 de détection. La figure 3 est décrite conjointement à la figure 4 qui représente différents signaux observés dans le module de détection.

Ainsi, la figure 3 montre un circuit électronique 301 qui respecte notamment les contraintes suivantes :
- Une dynamique allant de 800 mV à 5 V crête (tension différentielle entre deux fils constituant la liaison 19 d'un signal téléinformation Sin ; ainsi, tout signal d'entrée supérieur à 800 mV doit impérativement provoquer la sortie du mode de veille profonde, en étant interprété comme une information provenant du compteur 1 et provoque in fine la mise en service de la batterie 5 par la fermeture du dispositif interrupteur 6 ; à l'inverse, un signal d'entrée inférieur à 300 mV ne doit pas provoquer de sortie du mode de veille profonde ;
- Le circuit 301 n'engendre pas de non linéarité vue de l'entrée du capteur 10, en ne provoquant pas de discontinuité d'impédance d'entrée quelle que soit les conditions de fonctionnement dudit circuit 301.

Le signal téléinformation Sin est émis par le compteur 1. Il est également reçu par le module de démodulation 2. Le signal téléinformation Sin entre dans le module de détection 3 par la traversée d'une résistance d'entrée R1, de forte valeur, par exemple 4,7 KOhms, qui permet de minimiser les effets non linéaires entrainés par la conduction de diodes présentes dans le circuit 301, de telle sorte que du point de vue de l'entrée du module 3 de démodulation, l'impédance reste linéaire quelles que soient les conditions. Comme visible à la figure 4, le signal de téléinformation Sin est un signal sinusoïdal présentant une amplitude crête à crête de l'ordre de 800 mV ; selon la norme en vigueur, les signaux de téléinformations émis par le compteur 1 sont des signaux de 8 bits, chaque bit correspondant à un signal Sin du type de celui représenté, c'est-à-dire un signal modulé ASK de fréquence égale à 50 Hz, et de durée 833 micro secondes.
Dans la pratique, le signal effectivement reçu par le module de détection 2 est un signal légèrement atténué, du fait de la transmission en parallèle au module de démodulation 3 du signal Sin.

Après avoir traversé la résistance R1, le signal traverse un circuit détecteur de crête 302. Dans l'exemple représenté, le circuit détecteur de crête est du type tripleur de tension. Dans l'exemple considéré, le tripleur de tension présente la structure suivante :

Le signal circulant dans le module de détection 3 rencontre successivement :
- disposés en parallèle, d'une part une première capacité C1, par exemple de valeur 1,2 nF (nanofarad) et d'autre part une première diode D1 et une deuxième diode D2 ; une deuxième capacité C2, par exemple de valeur 1,2 nF, est disposée entre la masse du circuit 301 et un point de connexion P1 disposé entre la première diode D1 et la deuxième diode D2 ;
- disposée en parallèle, une troisième capacité C3, par exemple de valeur 1 nF.

L'orientation des trois diodes est telle que lors d'une première alternance positive du signal Se en entrée du tripleur de tension, la diode D1 est bloquée et la première capacité C1 se charge à la valeur Vc, qui correspond à la tension de crête du signal Se ; lors de la première alternance négative du signal d'entrée, la diode D1 est passante, et la deuxième capacité C2 se charge à la valeur 2Vc ; lors de la deuxième alternance positive du signal d'entrée, les diodes D2 et D3 sont passantes, et la troisième capacité C3 se charge à la valeur 3Vc.

On obtient ainsi, en sortie du tripleur de tension 302, un signal de sortie Ss continu représenté sur la figure 4, qui tend vers une valeur sensiblement égale à trois fois la tension d'entrée Se dudit tripleur de tension 302.

Une deuxième résistance R2, par exemple d'une valeur de 1000 kilo-ohms, est disposée en parallèle en sortie du tripleur de tension 302 ; cette résistance est utilisée pour la décharge de la capacité C3 lorsque le signal Sin n'est plus fourni en entrée du circuit de détection 3.

Le signal Se rencontre ensuite une troisième résistance R3, par exemple de valeur 47 kiloohms, dont la fonction est de diminuer la valeur de l'intensité du courant circulant, et arrivant sur la base d'un transistor bipolaire Q1. Comme illustré à la figure 4, lorsque l'intensité du signal de sortie du tripleur de tension 302 est suffisante, ce qui se produit à un instant t1 dans l'exemple considéré, soit pour une tension crête à crête d'environ 1 volt pour Ss, le transistor Q1 devient passant et une tension de sortie Sout du circuit 301, mesurée au niveau du collecteur du transistor Q1, diminue. Le collecteur est par ailleurs relié au port IT du microcontrôleur 7, alors que l'émetteur est relié à la masse du circuit 301. La transmission au circuit de détection 3 du signal de téléinformation Sin se traduit ainsi par la détection au niveau du port IT d'un signal d'interruption asynchrone, se traduisant par le passage d'un signal haut à un signal bas. Le microcontrôleur 7 passe alors dans un mode actif, met son horloge en activité, et produit le signal de contrôle Se qui est reçu par le dispositif interrupteur 6.

Ainsi, l'implémentation proposée pour le circuit 301 repose sur une détection d'enveloppe du signal de téléinformation Sin à base de tripleur de tension permettant de détecter suffisamment d'énergie compte tenue de la dynamique du signal d'entrée et dans des conditions de petit signal pour provoquer la conduction d'un transistor bipolaire. L'implémentation proposée permet d'obtenir un temps de réaction inférieur à 800 microsecondes, quelles que soient les conditions de température ambiante habituelles observées.

Comme illustré à la figure 5, le signal Sc est transmis sur la grille d'un transistor MOSFET type P Q2, dont la source est reliée à la batterie 5 et dont le drain est relié au module de démodulation 2. Ainsi, lorsqu'un signal de contrôle Se est émis par le microcontrôleur 7, le transistor peut passer d'un état bloqué à un état passant, permettant alors l'alimentation électrique du module 2 de démodulation ; inversement, la disparition du signal Sc bloque le transistor Q2, et replonge le capteur dans le mode de veille profonde.

## Revendications

1. Procédé de gestion du fonctionnement d'un capteur (10) d'information pour compteur (1), lequel comporte les différentes étapes consistant à :
- placer (21) le capteur (10) dans un mode de veille profonde, dans lequel une batterie (5) dudit capteur (10) n'alimente pas électriquement notamment un module (2) de démodulation de signaux issus dudit compteur (1) ;
- relier (22) le capteur (10) au compteur (1);
- détecter (23), au moyen d'un module (3) de détection du capteur(10), un signal d'information (Sin) en provenance du compteur (1) ;
- sortir (24) le capteur (10) du mode de veille profonde pour le placer dans un mode actif dans lequel la batterie (5) alimente électriquement notamment le module de démodulation (2).

2. Procédé selon la revendication précédente **caractérisé en ce que** l'étape consistant à sortir le capteur (10) du mode de veille profonde comporte les différentes opérations consistant à :
- transformer, au sein du module de détection, le signal d'information (Sin) en un signal d'interruption asynchrone (Sout) transmis à un microcontrôleur (7) du capteur (10) ;
- activer le microcontrôleur (7) notamment en activant une horloge interne du microcontrôleur (7);
- émettre depuis le microcontrôleur (7) vers un dispositif interrupteur (6) un signal de contrôle (Sc) provoquant une transition entre un mode bloqué, dans lequel le dispositif interrupteur (6) ne laisse passer de signal électrique entre la batterie (5) et le module de démodulation (2), et un mode passant, dans lequel le dispositif interrupteur (6) laisse passer un signal électrique entre la batterie (5) et le module de démodulation (2).

3. Procédé selon la revendication précédente **caractérisé en ce qu'**il comporte l'étape supplémentaire consistant à, en l'absence de signal de contrôle (Sc), basculer (25) le capteur (10) du mode actif au mode de veille profonde.

4. Procédé selon la revendication précédente **caractérisé en ce qu'**il comporte l'étape supplémentaire consistant à, préalablement à l'étape de basculement du capteur depuis le mode actif vers le mode de veille profonde, mémoriser des informations transmises par le compteur (1) au capteur (10) dans un module de mémoire (12).

5. Capteur (10) apte à intervenir dans le procédé selon l'une au moins des revendications précédentes, ledit capteur (10) comportant notamment :
- un microcontrôleur (7) ;
- une batterie d'alimentation électrique (5) ;
- un module (2) de démodulation de signaux reçus depuis un compteur (1), notamment un compteur électrique, relié audit capteur ;
**caractérisé en ce que** ledit capteur (10) comporte :
- un module de détection (3) pour détecter la transmission depuis le compteur (1) vers le capteur (10) d'un signal d'information (Sin) ;
- un dispositif interrupteur (6) pour bloquer l'alimentation électrique du module de démodulation (2) tant qu'aucun signal d'information (Sin) n'a été détecté par le module de détection (3), et pour assurer l'alimentation électrique du module de démodulation (2) lorsqu'un signal d'information (Sin) a été détecté par le module de détection (3).

6. Capteur (10) selon la revendication précédente **caractérisé en ce que** le module de détection (3) comporte un circuit détecteur de crête (302).

7. Capteur selon la revendication précédente **caractérisé en ce que** le circuit détecteur de crête (302) est du type circuit tripleur de tension.

8. Capteur (10) selon l'une au moins des revendications 5 à 7**caractérisé en ce que** le module de détection (3) comporte une résistance d'entrée (R1) de valeur comprise entre 1 kilo-ohm et 10 kilo-ohms, notamment 4,7 kilo-ohms.

9. Capteur (10) selon l'une au moins des revendications 6 à 8 **caractérisé en ce que** le module de détection (3) comporte un moyen de génération (Q1) d'un signal d'interruption asynchrone (Sout) lorsqu'un signal d'information (Sin) est reçu par ledit capteur (10).

10. Capteur (10) selon l'une au moins des revendications 5 à 9 **caractérisé en ce que** le dispositif interrupteur (6) comporte un transistor de type MOSFET (Q2) qui est passant lors de la transmission d'un signal de contrôle (Sc), émis par le microcontrôleur (7), sur la grille dudit transistor (Q2)..

## Patentansprüche

1. Verfahren zur Betriebsverwaltung eines Datensensors (10) für einen Zähler (1), das aus folgenden Etappen besteht:
- Den Sensor (10) in einen Tiefschlafmodus schalten, in dem eine Batterie (5) des besagten Sensors (10) ein Demodulationsmodul für Signale (2) aus dem besagten Zähler (1) nicht mit Strom versorgt;
- Ein vom Zähler (1) kommendes Informationssignal (Sin) mit Hilfe eines Detektionsmoduls (3) des Sensors (10) erkennen (23);
- Den Sensor (10) aus dem Tiefschlafmodus holen (24) und ihn in einen aktiven Modus schalten, in dem die Batterie (5) insbesondere das Demodulationsmodul (2) mit Strom versorgt.

2. Verfahren gemäß vorherigem Patentanspruch, **dadurch gekennzeichnet, dass** die Etappe, die darin besteht den Sensor (10) aus dem Tiefschlafmodus zu holen, aus verschiedenen Schritten besteht:
- Im Detektionsmodul das Informationssignal (Sin) in ein asynchrones Unterbrechungsignal (Sout) verwandeln, das an einen Mikrocontroller (7) des Sensors (10) weitergeleitet wird;
- Den Mikrocontroller (7) durch die Aktivierung einer inneren Uhr im Mikrocontroller (7) aktivieren;
- Vom Mikrocontroller (7) ein Steuersignal (Sc) an eine Schaltvorrichtung (6) senden, die eine Umstellung vom Sperrbetrieb, in dem die Schaltvorrichtung (6) kein elektrisches Signal zwischen der Batterie (5) und dem Demodulationsmodul (2) passieren lässt, in einen leitenden Betrieb hervorruft, in dem die Schaltvorrichtung (6) ein elektrisches Signal zwischen der Batterie (5) und dem Demodulationsmodul (2) passieren lässt.

3. Verfahren gemäß vorherigem Patentanspruch, **dadurch gekennzeichnet, dass** eine zusätzliche Etappe unterschieden wird, die bei fehlendem Steuersignal (Sc) darin besteht, den Sensor (10) vom aktiven Betrieb in den Tiefschlafmodus umzuschalten (25).

4. Verfahren gemäß vorherigem Patentanspruch, **dadurch gekennzeichnet, dass** eine zusätzliche Etappe unterschieden wird, die darin besteht, vor der Etappe der Umschaltung des Sensors vom aktiven Betrieb in den Tiefschlafmodus, die vom Zähler (1) an den Sensor (10) übermittelten Informationen in einem Speichermodul (12) zu speichern.

5. Sensor (10), der in der Lage ist, in das Verfahren gemäß mindestens einem der vorherigen Patentansprüche einzugreifen, wobei der besagte Sensor (10) insbesondere folgende Komponenten umfasst:
- einen Mikrocontroller (7);
- eine Batterie für die Stromversorgung (5);
- ein Demodulationsmodul (2) für die Signale, die von einem Zähler (1), insbesondere einem Stromzähler, der mit dem besagten Sensor verbunden ist, gesendet werden;
**dadurch gekennzeichnet, dass** der besagte Sensor (10) folgende Komponenten umfasst:
- ein Detektionsmodul (3) zur Erkennung der Übermittlung eines Informationssignals (Sin) vom Zähler (1) zum Sensor (10);
- eine Schaltvorrichtung (6) zur Sperrung der Stromversorgung des Demodulationsmoduls (2), solange kein Informationssignal (Sin) vom Detektionsmodul (3) erkannt worden ist, und zur Sicherstellung der Stromversorgung des Demodulationsmoduls (2), wenn ein Informationssignal (Sin) vom Detektionsmodul (3) erkannt worden ist.

6. Sensor (10) gemäß vorherigem Patentanspruch, **dadurch gekennzeichnet, dass** das Detektionsmodul (3) einen Spitzenwertgleichrichterkreis (302) umfasst.

7. Sensor gemäß vorherigem Patentanspruch, **dadurch gekennzeichnet, dass** es sich beim Spitzenwertgleichrichterkreis (302) um einen Stromkreis des Typs Spannungsverdreifacher handelt.

8. Sensor (10) gemäß mindestens einem der vorherigen Patentansprüche 5 bis 7, **dadurch gekennzeichnet, dass** das Detektionsmodul (3) aus einem Eingangswiderstand (R1) mit Werten zwischen 1 Kiloohm und 10 Kiloohm, insbesondere 4,7 Kiloohm, besteht.

9. Sensor (10) gemäß mindestens einem der vorherigen Patentansprüche 6 bis 8, **dadurch gekennzeichnet, dass** das Detektionsmodul (3) über eine Einrichtung zur Erzeugung (Q1) eines asynchronen Unterbrechungssignals (Sout) verfügt, zum Zeitpunkt des Empfangs eines Informationssignals (Sin) durch den besagten Sensor (10).

10. Sensor (10) gemäß mindestens einem der vorherigen Patentansprüche 5 bis 9, **dadurch gekennzeichnet, dass** die Schaltvorrichtung (6) aus einem Transistor des Typs MOSFET (Q2) besteht, der bei der Übertragung eines Steuersignals (Sc) durch den Mikrocontroller (7) dieses durch das Gitter des besagten Transistors (Q2) passieren lässt.

## Claims

1. Method for managing the operation of an information sensor (10) for a meter (1), which comprises the various steps consisting in:
- - putting (21) the sensor (10) into a deep standby mode, in which a battery (5) of said sensor (10) does not power in particular a module (2) for demodulating signals from said meter (1);
- - connecting (22) the sensor (10) to the meter (1);
- - detecting (23), by means of a module (3) for detecting of the sensor (10), an information signal (Sin) from the meter (1);
- - taking (24) the sensor (10) out of the deep standby mode in order to put it into an active mode in which the battery (5) electrically powers in particular the module for demodulating (2).

2. Method as claimed in the preceding claim **characterised in that** the step consisting in taking the sensor (10) out of the deep standby mode comprises the various operations consisting in:
- - transforming, within the module for detecting, the information signal (Sin) into an asynchronous interruption signal (Sout) transmitted to a microcontroller (7) of the sensor(10);
- - activating the microcontroller (7) in particular by activating an internal clock of the microcontroller (7);
- - emitting from the microcontroller (7) to a switching device (6) a control signal (Sc) provoking a transition between a blocked mode, wherein the switching device (6) does not allow the electrical signal to pass between the battery (5) and the module for demodulating (2), and a passing mode, wherein the switch device (6) allows an electrical signal to pass between the battery (5) and the module for demodulating (2).

3. Method as claimed in the preceding claim **characterised in that** it comprises the additional step consisting in, in the absence of a control signal (Sc), switching (25) the sensor (10) from the active mode to the deep standby mode.

4. Method as claimed in the preceding claim **characterised in that** it comprises the additional step consisting in, prior to the step of switching the sensor from the active mode to the deep standby mode, memorising information transmitted by the meter (1) to the sensor (10) in a memory module (12).

5. Sensor (10) able to intervene in the method according to at least one of the preceding claims, said sensor (10) comprising in particular:
- - a microcontroller (7);
- - a battery for electrical power (5);
- - a module (2) for demodulating signals received from a meter (1), in particular an electrical meter, connected to said sensor; **characterised in that** said sensor (10) comprises:
- - a module for demodulating (3) for detecting the transmission from the meter (1) to the sensor (10) of an information signal (Sin);
- - a switching device (6) in order to block the electrical power supply of the module of demodulating (2) as long as no information signal (Sin) has been detected by the module for detecting (3), and to provide the electrical power of the module for demodulating (2) when an information signal (Sin) has been detected by the module for detecting (3).

6. Sensor (10) as claimed in the preceding claim **characterised in that** the module for detecting (3) comprises a circuit for detecting a peak (302).

7. Sensor as claimed in the preceding claim **characterised in that** the circuit for detecting a peak (302) is of the voltage tripler circuit type.

8. Sensor (10) according to at least one of claims 5 to 7 **characterised in that** the module for detecting (3) comprises an input resistor (R1) of a value between 1 kilo-ohm and 10 kilo-ohms, in particular 4.7 kilo-ohms.

9. Sensor (10) according to at least one of claims 6 to 8 **characterised in that** the module for detecting (3) comprises a means for generating (Q1) an asynchronous interruption signal (Sout) when an information signal (Sin) is received by said sensor (10).

10. sensor (10) according to at least one of claims 5 to 9 **characterised in that** the switching device (6) comprises a transistor of the MOSFET type (Q2) which is conductive during the transmission of a control signal (Sc), emitted by the microcontroller (7), on the gate of said transistor (Q2).
